# EUROPEAN PATENT APPLICATION

(11) **EP 1 777 950 A2**
(43) Date of publication of application: **25.04.2007**
(21) Application number: 06122305.3
(22) Date of filing: 13.10.2006
(51) Int. Cl.: H04N 5/445

(54) **Display apparatus**

(30) Priority: 21.10.2005 KR 20050099495
(71) Applicant: Samsung Electronics Co., Ltd., Suwon-si, Gyeonggi-Do (KR)
(72) Inventor: Pak, Sung-youn, Seoul (KR); Yun, Young-hwa, Seoul (KR)
(74) Representative: Walaski, Jan Filip

(57) **Abstract**

A display apparatus including a user input unit and a display unit on which an image is displayed according to the input video signal, includes a user interface (UI) generator producing a UI information signal in order to display UI information; a processor which receives at least one of the video signal and the UI information signal and processes the received signal so as to be displayed on the display unit; and a controller which controls the UI generator and the processor so that the UI information is displayed on a portion of the display unit, and the image is scaled to a predetermined size to be displayed on another portion of the display unit, when display of the UI information is requested via operation of the user input unit.

## Description

The present invention relates to a display apparatus, particularly but not exclusively to a display apparatus and a control method thereof that performs manipulation of user interface (UI) information by securing a display region on which UI information is displayed and by dynamically altering and displaying an image while taking into account the display region for the displayed UI information, at the time of displaying the UI information.

A general display apparatus includes a video signal input unit that receives a video signal from an external source, a signal processing unit that processes the input video signal, and a display unit that displays an image according to a video signal processed by the signal processing unit.

The general display apparatus may be a TV set that receives a broadcast signal and displays an image according to the broadcast signal, or the general display apparatus may be a multi-functional display system that selectively performs the functions of a computer display or a television (TV) set.

The functions of the display apparatus have become more varied as the demands of users increase. Therefore, a recent display apparatus provides many functions selectable from various kinds of UI menus to a user in order to satisfy the user's various demands.

A UI menu for a user in the related art display apparatus will be briefly explained. If the UI menu is selected to be displayed in the related art display apparatus, the UI menu is displayed on the display unit at the same time as an image that is currently being displayed. Thus, if the UI menu is selected to be displayed in the related art display apparatus, it is common for the UI menu to overlap onto the image that is currently being processed and displayed. Therefore, in the related art display apparatus, in order to minimize the amount of UI menu overlap onto the image being displayed, the UI menu is displayed on only a certain region of the display unit. As a result, in order to control detailed settings of a control item on the UI menu, the number of items to be displayed in the UI menu increases or a depth or page concept is utilized. For example, if a predetermined control item is selected, in order to control the detail settings corresponding to the predetermined control item among the control items of the displayed UI menu, the UI menu display is removed and a sub-UI menu, which corresponds to the predetermined control item, is displayed at a position corresponding to that of the previously displayed UI menu.

Users who use the UI menu of the related art display apparatus, do not understand well that a UI menu screen will shift when a depth concept or a page concept is used. Moreover, since the user must concentrate on the UI menu during operation of the UI menu, the user does not watch the image being displayed to a certain extent.

This is because, in the related art display apparatuses, it is difficult for a user to operate a UI menu that has been shifted and displayed in a restricted display region.

Exemplary embodiments of the present invention overcome the above disadvantages and other disadvantages not described above. Also, the present invention is not required to overcome the disadvantages described above, and an exemplary embodiment of the present invention may not overcome any of the problems described above. The present invention provides a display apparatus and a control method thereof that can efficiently perform manipulation of complicated UI information by securing a display region on which UI information is displayed and by dynamically altering and displaying an image while taking into account the display region for the displayed UI information, at the time of displaying the UI information.

According to an aspect of the present invention, there is provided a display apparatus including a user input unit and a display unit on which an image is displayed according to an input video signal. The display apparatus comprises a UI generator producing a UI information signal in order to display UI information, which may, for example, be predetermined based on the type of display unit; a processor which receives at least one of the video signal and the UI information signal and processes the received signal so as to be displayed on the display unit; and a controller that, when display of the UI information is requested via operation of the user input unit, controls the UI generator and the processor so that the UI information is displayed on a portion of the display unit, and controls the processor so that the video signal is modified in order to display the image on another portion of the display unit.

According to an embodiment of the present invention, when display of the UI information is requested via operation of the user input unit, the controller controls the UI generator and the processor so that the UI information is displayed on a portion of the display unit, and controls the processor so that the image is reduced to have a predetermined size to be displayed on another portion of the display unit where the UI information has not been displayed.

According to an embodiment of the present invention, the processor comprises a scaler that scales the video signal in order to control at least one of a display size and a display position of the image.

According to an embodiment of the present invention, the controller determines, based on overall display region information of the display unit and display region information of the UI information detected from the scaler, remaining display region information corresponding to a remaining portion of the display unit where the UI information has not been displayed.

According to an embodiment of the present invention, when display of the UI information is requested, the controller controls the scaler in order to scale the video signal based on the remaining display region information, the image display size and the image display position is controlled such that the image can be displayed on a portion within the remaining portion of the display unit.

According to an embodiment of the present invention, when display of the UI information is requested, the controller controls the scaler to scale the video signal using predetermined display position information and predetermined display size information that are pre-stored in order to display the image in the remaining portion at the time of displaying the UI information, the image having the display size and the display position which correspond to the predetermined display position information and the predetermined display size information, respectively. The predetermined display position information and the predetermined display size information may respectively be, for example, fixed values based on the type of display unit.

According to an embodiment of the present invention, when the display of the UI information is requested, the controller controls the scaler to scale the video signal based on the remaining display region information and based on a basic screen ratio of the image that is pre-stored, the image maintains the basic screen ratio and the image display size and the image display position are such that the image can be displayed on a portion within the remaining portion of the display unit.

According to an embodiment of the present invention, the displayed UI information comprises a plurality of control items that respectively control a plurality of functions, and an indication highlight for indicating any one among the plurality of control items. The controller controls the UI generator so that the indication highlight can be moved and displayed on the plurality of control items according to operation of the user input unit.

According to an embodiment of the present invention, when display of sub-UI information corresponding to the control item indicated by the indication highlight is requested through the user input unit, the controller controls the UI generator and the scaler to display sub-UI information on a portion of the display unit which is adjacent to the UI information. The sub-UI information may be, for example, predetermined based on the type of display unit.

According to an embodiment of the present invention, the controller, based on the overall display region information of the display unit, the display region information of the UI information and the sub-UI information detected from the scaler, identifies the remaining display region information as display region information corresponding to a remaining portion of the display unit where the UI information and the sub-UI information.

Another aspect of the invention, there is provided a control method of controlling a display apparatus including a display unit on which an image is displayed according to an input video signal. The control method comprises determining whether display of UI information is requested; if display of the UI information is requested, producing a UI information signal for displaying the UI information; displaying the UI information on a portion of the display unit; and modifying the video signal in order to display the image on another portion of the display unit. The request to display UI information may be from an external source such as, for example, a user.

The UI information may be, for example, predetermined based on the type of display unit.

According to an embodiment of the invention, the user input is provided through a user input unit that communicates with the display apparatus.

According to an embodiment of the present invention, the displaying the image on another portion of the display unit comprises reducing the image into a predetermined size; and displaying the reduced image on a remaining portion of the display unit where the UI information is not displayed.

According to an embodiment of the present invention, the displaying the image on the remaining portion of the display unit comprises scaling the video signal in order to control at least one of a display size and a display position of the image.

According to an embodiment of the present invention, the control method further comprises determining, based on overall display region information of the display unit and information display region information of the displayed UI information, remaining display region information corresponding to the remaining portion of the display unit where the UI information is not displayed.

According to an embodiment of the present invention, the displaying the image on the remaining portion of the display unit comprises scaling the video signal based on the remaining display region information, the image display size and the image display position controlled such that the image can be displayed on a portion within the remaining portion of the display unit.

According to an embodiment of the present invention, the control method further comprises pre-storing predetermined display position information and predetermined display size information in order to display the image in the remaining portion at the time of displaying the UI information. The displaying of the image on the remaining portion of the display unit comprises scaling the video signal in a manner that the image has the display size and the display position that respectively correspond to the predetermined display position information and the predetermined display size information. The predetermined display position information and the predetermined display size information may be, for example, fixed values based on the type of display unit.

According to an embodiment of the present invention, the control method further comprises pre-storing a basic screen ratio of the image, wherein the displaying the image on the remaining portion of the display unit comprises scaling the video signal based on the remaining display region information in a manner that the image maintains the basic screen ratio when displayed on a portion within the remaining portion of the display unit.

According to an embodiment of the present invention, the displayed UI information comprises a plurality of control items for respectively controlling a plurality of functions, and an indication highlight for indicating any one among the plurality of control items. The control method further comprises controlling the indication highlight to be moved and displayed on the plurality of control items according to external user input, which may be, for example, an operation of the user input unit.

According to an embodiment of the present invention, the control method further comprises determining, when the predetermined sub-information display is requested, whether display of sub-UI information corresponding to the control item indicated by the indication highlight is requested, and displaying the sub-UI information on a portion of the display unit that is adjacent to the UI information.

According to an embodiment of the present invention, the operation of determining the remaining display region information comprises identifying, based on the overall display region information of the display unit, the information display region information of the UI information and the sub-UI information, the remaining display region information as display region information corresponding to a remaining portion of the display unit in which the UI information and the sub-UI information is not displayed. 21. The display apparatus of claim 1, wherein the UI information is predetermined based on the type of display unit.

According to an embodiment of the present invention, the UI information is predetermined based on the type of display unit.

According to an embodiment of the present invention, the predetermined display position information and the predetermined display size are fixed values based on the UI information.

According to an embodiment of the present invention, the UI information is predetermined based on the type of display unit.

According to an embodiment of the present invention, the predetermined display position information and the predetermined display size are fixed values based on the UI information.

According to an embodiment of the present invention, the user input is provided through a user input unit that communicates with the display apparatus.

Embodiments of the invention will now be described, by way of example, with reference to the accompanying drawings, in which:
Figure 1 is a control block diagram showing a display apparatus according to an exemplary embodiment of the present invention;
Figures 2A and 2B are flow charts for explaining an operational method of controlling a display apparatus according to an exemplary embodiment of the present invention;
Figures 3A and 3B illustrate displaying an image while displaying a main UI menu in the display apparatus according to an exemplary embodiment of the present invention;
Figures 4A and 4B illustrate displaying an image an image while displaying a sub-UI menu in the display apparatus according to an exemplary embodiment of the present invention; and
Figure 5 illustrates displaying an image while displaying a sub-UI menu in a display apparatus according to an exemplary embodiment of the present invention.

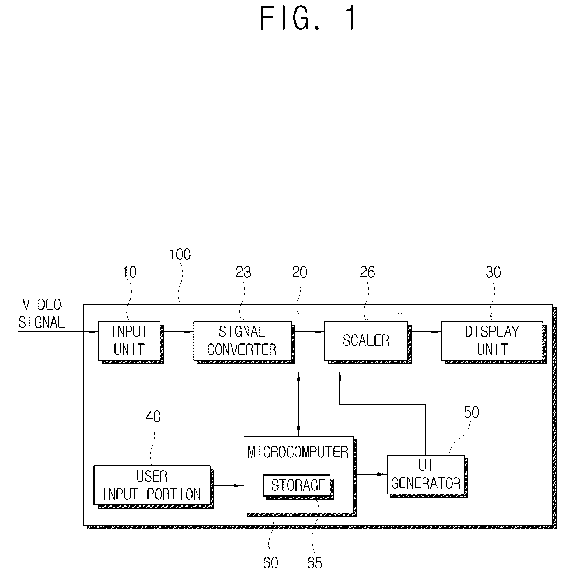

Hereinafter, exemplary embodiments of the present invention are described in detail with reference to Figures 1 to 5.

As shown in Figure 1, a display apparatus 100 according to an exemplary embodiment of the present invention includes an input unit 10, a processor 20, a display unit 30, a user input portion 40, a UI generator 50 and a microcomputer (MICOM) 60. The display apparatus as shown in Figure 1 can be, for example, a digital TV set receiving and processing a digital broadcast signal, an analog TV set receiving and processing an analog broadcast signal, a monitor for a computer, or a multi-functional display system which can selectively perform the functions of a computer monitor or a TV set.

The input unit 10 receives a video signal from an external source. The input unit 10 can have a connection terminal to which an input cable and/or an antenna is connected for receiving a broadcast signal.

The display unit 30 receives a video signal processed in the processor 20 and displays an image according to the received video signal. The display unit 30 includes a display panel (not shown) on which images are displayed, and a panel driver (not shown) which processes the video signal input from the processor 20 to then be displayed on the display panel (not shown).

The user input portion 40 outputs a key signal to the MICOM 60 according to operations entered by a user. The user input portion 40 includes, for example, a UI menu key for requesting display of the UI information, Up/Down/Left/Right keys for navigation and an EXIT key. The user input portion 40 also includes a key signal generator generating a key signal corresponding to a key stroke.

The user input portion 40 may be provided on a front surface of the display apparatus 100, or provided in the form of a separately connected input device, that is, for instance, a mouse (not shown) and/or a keyboard (not shown). The user input portion 40 may also be provided in the form of a wireless remote-controller. If a user manipulates a key, the key signal generator generates a key signal corresponding to the key stroke, which is then applied to the MICOM 60. Accordingly, the MICOM 60 controls the processor 20 and the UI generator 50 based on the key signal input from the key signal generator of the user input portion 40.

The processor 20 receives at least one of the video signal input through the input unit 10 and the UI information signal output from the UI generator 50 and processes the received signal so as to be displayed on the display unit 30. The processor 20 includes a signal converter 23 that converts the video signal input through the input unit 10, and a scaler 26 that scales the video signal output from the signal converter 23 to a format that can be displayed on the display unit 30.

The signal converter 23 converts the video signal input through the input unit 10 into a video signal that the scaler 26 can process. For example, if the input unit 10 includes an antenna, the signal converter 23 may include a tuner that receives, for example, a broadcast signal that is a radio frequency (RF) signal input from the antenna and a video decoder that decodes the broadcast signal from the tuner. Moreover, if the input unit 10 includes a connection terminal, the signal converter 23 can include a video decoder that decodes an analog video signal such as, for example, a Composite Video Baseband Signal (CVBS), an S-video signal, etc. input from the connection terminal.

In the case where the input unit 10 includes a digital connection terminal, the signal converter 23 may include a Transition Minimized Differential Signaling (TMDS) receiver that separates a digital image signal, including a DVI signal etc., input from an external source through the digital connection terminal into a RGB digital signal and a H/V synchronizing signal. The RGB digital signal and the H/V synchronizing signal are then output to the scaler 26. The signal converter 23 may also include an analog-to-digital (A/D) converter that converts an analog image signal such as, for example, an input component signal or a PC signal into a digital image signal that is then output to the scaler 26.

The scaler 26 scales the video signal output from the signal converter 23 to a format to be displayed on the display unit 30. The scaler 26 can scale the video signal in order to control at least one of a display size and a display position of an image according to the video signal under the control of the MICOM 60. The scaler 26 scales the video signal under the control of the MICOM 60 such that the resulting image is displayed, with a predetermined display size, on a predetermined display position of the overall display region of the display unit 30.

The scaler 26 also receives a UI information signal output from the UI generator 50 (to be described later), and processes the video signal and the UI information signal in order that the image according to the video signal input from the signal converter 23 and the UI information according to the UI information signal can be displayed together on the display unit 30. Preferably, but not necessarily, the display size and the display position of the UI information on the display unit 30 are pre-set in the scaler 26 based on the type of displayed UI information.

The UI information may be predetermined based on the type of display unit, and the predetermined display position information and the predetermined display size may be fixed values based on the UI information.

As described above, the scaler 26 in the processing unit 20 receives the UI information signal output from the UI generator 50 and processes the video signal and the UI information signal in order that the image and the UI information can be displayed together on the display unit 30. However, the present invention is not limited to just this exemplary embodiment. That is, the functions of processing the video signal and the UI information signal are not limited to being performed at the scaler 26 of the processor 20, but these functions can also be performed in the signal converter 23, or in a separate processor (not shown).

Based on a request sent through the user input portion 40 and under the control of the MICOM 60 , the UI generator 50 produces a UI information signal for displaying UI information, which may be predetermined based on, for example, the type of display unit. The UI information can include, for example, a UI menu for adjusting various functions such as, for example, a display size, a display mode, an acoustic mode, a favorite channel of the display apparatus 100, and various kinds of symbolic information showing a state of the display apparatus 100. In the following description, the present invention will describe an embodiment that displays the UI menu of the UI information.

The UI generator 50 pre-stores UI menu information for producing various types of upper/lower menus such as a main UI menu that includes a plurality of control items for respectively adjusting a plurality of functions such as, for example, the display size, the display mode, the acoustic mode, and the favorite channel of the display apparatus 100, and a sub-UI menu that controls detail settings corresponding to each control item. Accordingly, the UI generator 50 extracts corresponding UI menu information under the control of the MICOM 60 according to a request sent through the user input portion 40, and outputs a UI menu signal based on the extracted UI menu information.

The UI generator 50 displays an indication highlight for indicting any one of the plurality of control items included in the UI menu. The indication highlight can be moved and displayed on the plurality of control items under the control of the MICOM 60 according to a request sent through the user input portion 40.

When a request is sent through the user input portion 40 to display UI information (hereinafter referred to as a UI menu), the MICOM 60 controls the UI generator 50 and the processor 20 in order to display the UI menu on a portion of the display unit 30. The image displayed on the display unit 30 is reduced to a predetermined size and displayed on a remaining portion of the display unit where the UI menu is not displayed.

The MICOM 60 processes the video signal input from the input unit 10, and controls the processor 20 in order that the image based on the video signal can be displayed on the full screen of the display unit 30. The MICOM 60 determines whether or not the UI menu display is requested through operation of the user input portion 40. When the UI menu key of the user input portion 40 is input by a user, the key signal corresponding to the UI menu key from the user input portion 40 is input to the MICOM 60. As a result, the MICOM 60 determines that this as a UI menu display request.

If the UI menu display is requested, the MICOM 60 controls the UI generator 50 in order to produce the UI menu signal for displaying the UI menu. Preferably, but not necessarily, when the image is displayed on the overall display region of the display unit 30 and the UI menu key is operated for the first time, i.e., at the state where the UI menu has not been displayed, the MICOM 60 controls the UI generator 50 in order to produce the UI menu signal for displaying the main UI menu. The UI menu signal output from the UI generator 50 is provided to the scaler 26. The scaler 26 processes the UI menu signal in order that the UI menu (for example, a main UI menu) having the corresponding display size and the corresponding display position can be displayed on a portion of the display unit 30.

The MICOM 60 gets the menu display region information of the UI menu displayed on the portion of the display unit 30 from the scaler 26. Thus, the MICOM 60 determines, based on overall display region information of the display unit 30 and the menu display region information, remaining display region information corresponding to a remaining portion of the display unit 30 where the UI information is not displayed.

When the UI menu is displayed, the MICOM 60 controls the scaler 26 in order to scale the video signal based on the determined remaining display region information so that the image, which was displayed on the full screen of the display unit 30, now has a display size and a display position such that the image can be displayed on a portion within the remaining portion of the display unit 30.

With the MICOM 60 it is possible to pre-store predetermined display position information and predetermined display size information in, for example, a storage 65 for use in reducing and displaying the image on the remaining portion when the UI information is displayed. Thus, when displaying the UI menu, the MICOM 60 controls the scaler 26 to scale the video signal so that the image, which was displayed on the full screen of the display unit 30, can now be scaled according to the predetermined display position information and the predetermined display size information, and displayed, with the predetermined size, in the predetermined position of the remaining portion.

With the MICOM 60, it is possible to pre-store a basic screen ratio of the image displayed on the full screen of the display unit 30 in the storage 65. The basic screen ratio corresponds to a ratio of the horizontal length and the vertical length of the displayed video screen, that is, 16 : 9 (width : length) or 4 : 3 (width : length). Thus, when the UI menu is displayed, it is preferable, but not necessary, that the MICOM 60 controls the scaler 26 to scale the video signal based on the determined remaining display region information such that the basic screen ratio (e.g., 16 : 9) of the image, which has been displayed on the full screen of the display unit 30, is maintained, and to have a display size and a display position which can be displayed on a portion within the remaining portion.

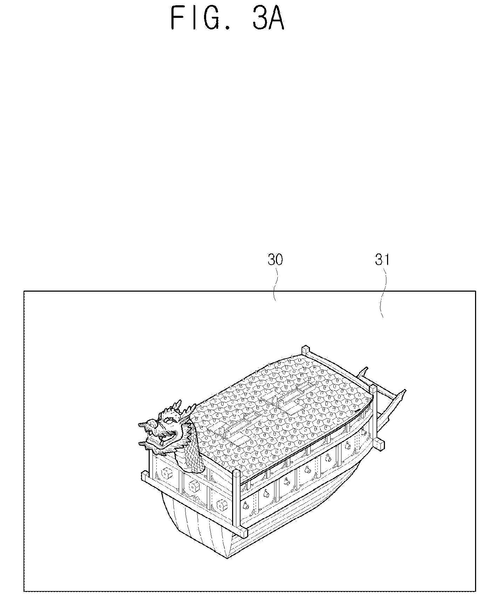

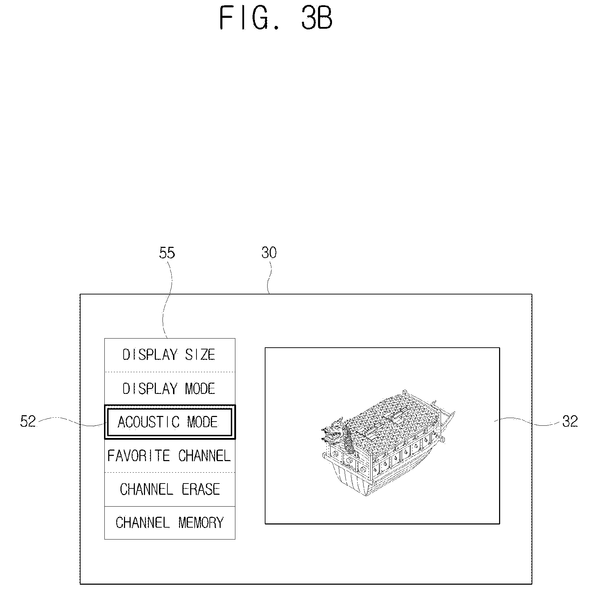

Referring to Figures 3A and 3B, an example in which the UI menu display is requested when the image according to the externally input video signal is displayed on the full screen of the display unit 30 will be described. Figures 3A and 3B illustrate an image as a main UI menu display is displayed on the display apparatus 100.

As shown in Figure 3A, a predetermined image 31 according to an externally input video signal is displayed on the full screen of the display unit 30 by operations of the input unit 10 and the processor 20 under the control of the MICOM 60. If a UI menu key is selected through the user input portion 40, a main UI menu 55 is displayed on a portion of the display unit 30 as shown in Figure 3B. The display in Fig. 3B is produced by operations of the UI generator 50 and the scaler 26 under the control of the MICOM 60. Specifically, a reduced image 32 is produced by reducing the image 31 and displaying it on a portion of a remaining portion where the main UI menu 55 is not displayed. Here, as shown in Figure 3B, the main UI menu 55 includes a plurality of control items for adjusting various functions such as, for example, a display size, a display mode, an acoustic mode, and a favorite channel and an indication highlight 52 for indicating any one among the plurality of control items.

The MICOM 60 determines whether or not the indication operation of the indication highlight 52 is input through operation of the user input portion 40. When, for example, one among Up/Down/Left/Right keys (not shown) for navigation in the user input portion 40 is operated when the UI menu is displayed, a key signal corresponding to the appropriate navigation key is input from the user input portion 40 to the MICOM 60. Accordingly, the MICOM 60 determines the key input as an indication operation.

During the indication operation, the MICOM 60 controls the UI generator unit 50 in order that the indication highlight 52 can be moved and displayed on the plurality of control items according to the input indication operation.

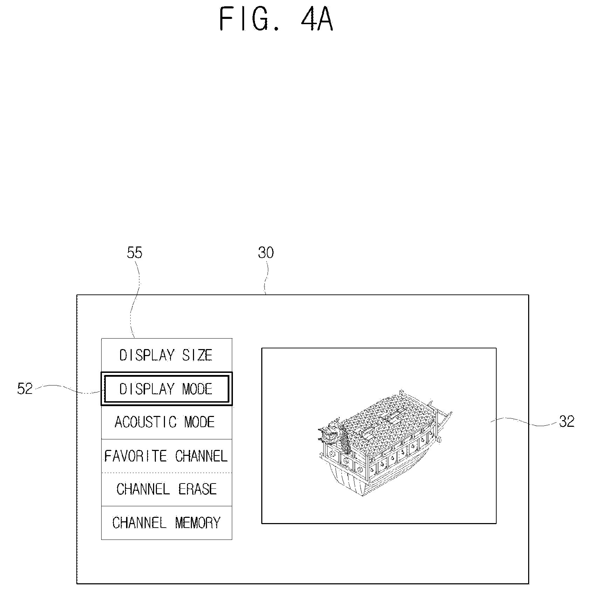

An example illustrating the indication highlight 52 operation will be described with reference to Figures 3A to 4B. If the navigation UP key (not shown) is manipulated when, for example, the acoustic mode item is indicated as the indication highlight 52 as shown in Figure 3B, the indication highlight 52 moves up as shown in Figure 4A by operation of the UI generating unit 50 under the control of the MICOM 60, and the display mode item is now indicated as the indication highlight 52.

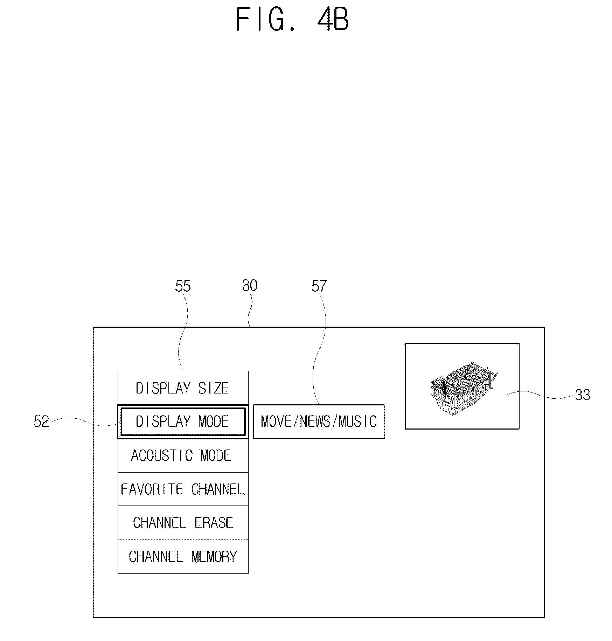

As described above, when the indication highlight 52 is moved among the control items of the UI menu 55 according to the indication operation through the user input portion 40, the MICOM 60 determines whether or not a predetermined sub-menu display 57 (Figure 4B) has also been requested through the user input portion 40. For example, when the UI menu key (not shown) of the user input portion 40 is operated when the UI menu 55 is being displayed, the MICOM 60 receives a key signal corresponding to the UI menu key from the user input portion 40, and determines that the key signal is a sub-menu display request. Of course, the user input portion 40 may include a separate function key (not shown) for requesting a sub-menu display.

If a sub-menu display is requested, the MICOM 60 determines whether or not a sub-menu corresponding to the control item indicated by the indication highlight 52 exists. If the sub-menu corresponding to the indicated control item exists, the MICOM 60 controls the UI generator 50 in order to produce a sub-UI menu signal for displaying a corresponding sub-UI menu 57. The MICOM 60 still controls the UI generator 50 in order to maintain the display state of the UI menu 55 (for example, a main UI menu) displayed on the display unit 30 (Figure 4B). That is, the UI generator 50 produces a UI menu signal and a sub-UI menu signal for displaying the UI menu 55 and the sub-UI menu 57, respectively, and outputs the produced UI menu signal and the sub-UI menu signal to the scaler 26. When the MICOM 60 displays the sub-UI menu 57, it controls the scaler 26 in order to display the sub-UI menu 57 on a portion of the display unit 30 that is adjacent to the UI menu 55, which is already being displayed.

Accordingly, the sub-UI menu signal output from the UI generator 50 is provided to the scaler 26. The scaler 26 processes the sub-UI menu signal in order that the sub-UI menu 57 has a corresponding display size and a corresponding display position, and the sub-UI menu 57 is displayed on a portion of the display unit 30 that is, for example, adjacent to the UI menu 55.

When the sub-menu display is requested, the MICOM 60 gets the menu display region information of the UI menu 55 and the sub-UI menu 57, which are displayed on the display unit 30, from the scaler 26. Thus, the MICOM 60 determines, based on the overall display region information on the display unit 30 and the menu display region information, the remaining display region information corresponding to the remaining portion of the display unit 30 where the UI menu 55 and the sub-UI menu 57 are not displayed.

Thus, when the sub-UI menu 57 is displayed, the MICOM 60 controls the scaler 26 to scale the video signal based on the determined remaining display region information such that the image has a display size and a display position that can be displayed on a portion within the remaining portion of the display unit 30 where the UI menu 55 and the sub-UI menu 57 are not displayed. For example, when the sub-UI menu 57 is displayed, the MICOM 60 controls the scaler 26 such that the image can be displayed with a predetermined size at a predetermined position in the remaining region of the display unit 30 where the UI menu 55 and the sub-UI menu 57 are not displayed. Also, when the sub-UI menu 57 is displayed, the MICOM 60 may control the scaler 26 such that a basic screen ratio, for example, (16 : 9) of the image is maintained when the image is displayed , on a remaining portion of the display unit 30 where the UI menu 55 and the sub-UI menu 57 are not displayed.

Referring to Figures 4A and 4B, an example of a sub-UI menu 57 at the state where a UI menu 55 has been illustrated will be described. Figures 4A and 4B show images when a main UI menu 55 and a sub-UI menu 57 are displayed on the display apparatus 100 according to the present invention.

As shown in Figure 4B, a main UI menu 55 is displayed on a portion of the display unit 30 by operation of the UI generator 50 and the scaler 26 under the control of the MICOM 60, and the reduced image 32 is displayed on a portion within the remaining portion where the main UI menu 55 is not displayed. If the UI menu key is re-selected through the user input portion 40, a sub-UI menu 57 corresponding to a control item (for example, a display mode) displayed as an indication highlight 52 as shown in Figure 4B is displayed together with a UI menu 55 by operations of the UI generator 50 and the scaler 26 under the control of the MICOM 60. Moreover, according to operations of the UI generator 50 and the scaler 26 under the control of the MICOM 60, a further reduced image 33 is obtained by reducing the reduced image 32 and displayed on a portion within the remaining portion where the main UI menu 55 and the sub-UI menu 57 are not displayed as shown in Figure 4B.

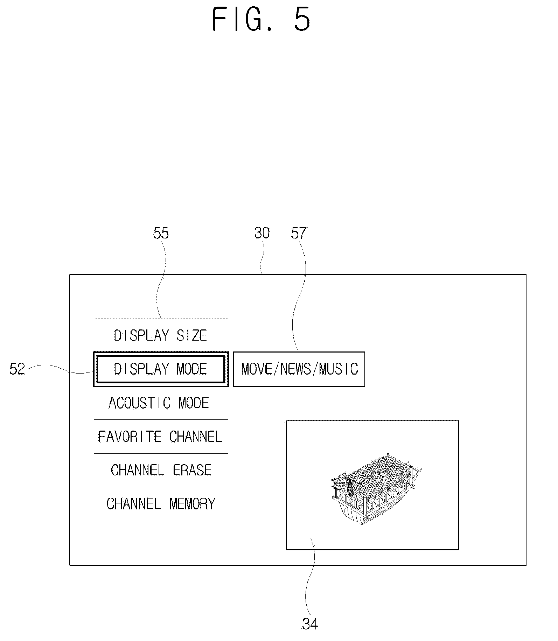

In Figures 3A to 4B, the basic screen ratio of the image is maintained by controlling a display size and a display position of the image. However, the present invention is not limited to maintaining a constant screen ration. That is, as shown in Figure 5, without maintaining a basic screen ratio of an image, an image 34 can be displayed to have, for example, the largest display size possible based on the remaining region of the display unit 30 where the main UI menu 55 and the sub-UI menu 57 are not displayed.

If the display apparatus 100 is a digital TV, the display apparatus 100 may store Electronic Program Guide (EPG) information extracted from a transport stream received through a broadcast signal. Thus, in the case that the display apparatus 100 is a digital TV, a UI menu (a main UI menu and a sub-UI menu) described in the above-described embodiment may be an EPG guide displayed based on the EPG information.

As described above, a display apparatus consistent with the present invention secures a sufficient UI menu display region on the full screen of the display unit when the UI menu is displayed, and an image obtained by reducing the image under display is displayed in the remaining portion of the display unit where the UI menu is not displayed. Thus, a display apparatus consistent with the present invention dynamically alters the image based on the display region of the UI menu when the UI menu is displayed. Therefore, a display apparatus consistent with the present invention helps a user focus on a UI menu operation, and thus, the user can efficiently perform a complicated UI menu operation.

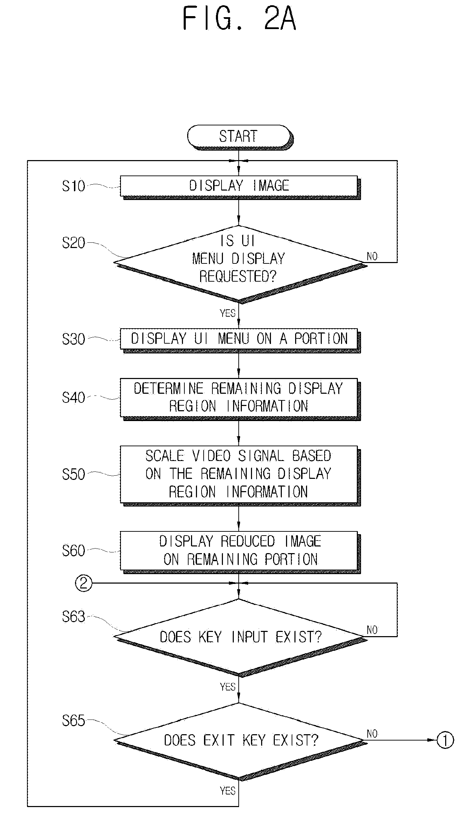

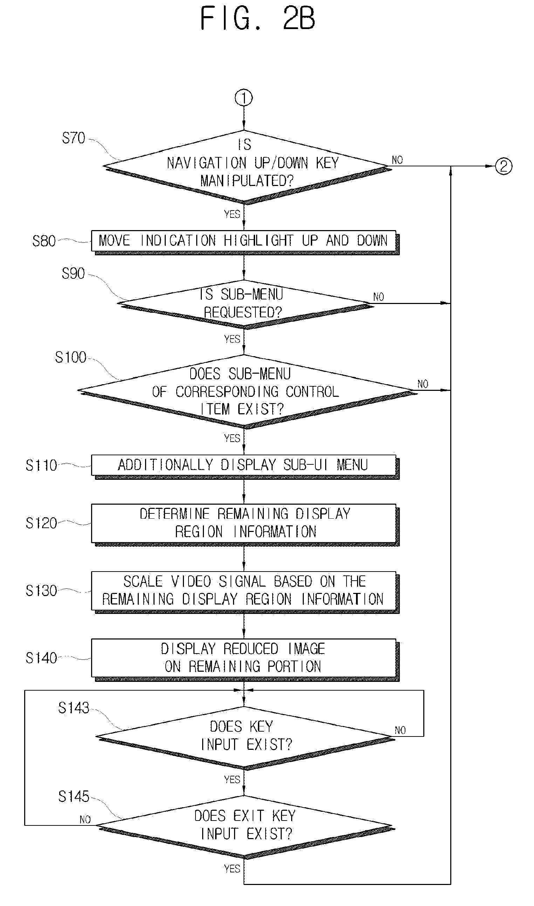

Hereinafter, referring to Figures 2A and 2B, a method of controlling the display apparatus 100 according to a an embodiment of the present invention will be illustrated in detail.

First, the MICOM 60 processes the video signal input through the input unit 10, and controls the processor 20 in order to display the image on the full screen of the display unit 30 (S10). Here, the MICOM 60 determines whether or not the UI menu display is requested through operation of the user input portion 40 (S20). If it is determined that the UI menu display is requested, the MICOM 60 controls the UI generator 50 in order to produce a UI menu signal for displaying a UI menu (for example, a main UI menu). The UI menu signal output from the UI generator 50 is processed by the scaler 26, and is displayed on a portion of the display unit 30 in which the UI menu (for example, a main UI menu) has a corresponding display size and a corresponding display position (S30).

The information in the UI menu may be predetermined based on the type of display unit, and the display position information and the display size may be predetermined fixed values based on the UI menu information.

Here, the MICOM 60 obtains menu display region information of the UI menu (for example, a main UI menu) displayed on a portion of the display unit 30 from the scaler 26 processing the UI menu signal, and determines remaining display region information corresponding to the remaining portion of the display unit 30 where the UI menu (for example, a main UI menu) is not displayed (S40). The MICOM 60 controls the scaler 26 to scale the video signal based on the determined remaining display region information such that the image, which was displayed on the full screen of the display unit 30, now has a display size and a display position that can be displayed on a portion within the remaining portion of the display unit 30 (S50). Thus, the image, which was displayed on the full screen of the display unit 30, is now reduced and displayed on a portion within the remaining portion of the display unit 30 (S60). Here, the MICOM 60 determines whether a key input exists through the user input portion 40 (S63). In the case that a key input exists, the MICOM 60 determines whether the key input corresponds to an EXIT key (S65). In the case that the EXIT key is operated, the MICOM 60 controls the UI generator 50 and the scaler 26 such that the reduced video screen returns to the prior state where the image is displayed on full screen of the display unit 30 without displaying the UI menu.

If the MICOM 60 determines that a key input, other than the EXIT key, has been operated (1), the MICOM 60 determines whether the key input is done by an indication operation of the indication highlight. That is, the MICOM 60 determines whether or not the navigation UP/DOWN keys of the user input portion 40 are operated when the UI menu is displayed, and judges whether or not the indication operation input exists (S70). If the navigation Up/DOWN keys are operated, the MICOM 60 controls the UI generator 50 in order that the indication highlight is moved and displayed on the control items of the UI menu (for example, a main UI menu) in correspondence to the navigation UP key or the navigation DOWN key (S80).

As described above, while the indication highlight is moved and displayed on the control items of the UI menu (for example, a main UI menu) according to the indication operation through the user input portion 40, the MICOM 60 determines whether or not a sub-menu display is requested through the user input portion 40 (S90). In the case that the sub-menu display is not requested, the MICOM 60 proceeds to operation S63 (2) in order to determine whether or not another key input exists through the user input portion 40. If the sub-menu display is not requested, the MICOM 60 determines whether or not the sub-menu corresponding to the control item displayed with the indication highlight exists (S100). In the case that the sub-menu does not exist, the MICOM 60 proceeds to operation S63 (2) in order to determine whether another key input exists through the user input portion 40. In the case that the sub-menu corresponding to the displayed control item exists, the MICOM 60 controls the UI generator 50 in order to produce a sub-UI menu signal for displaying a corresponding sub-UI menu. Here, the MICOM 60 controls the UI generator 50 in order to maintain the state of the UI menu (for example, a main UI menu) which is already displayed on the display unit 30. That is, the UI generator 50 produces a UI menu signal and a sub-UI menu signal for displaying a UI menu (for example, a main UI menu) and a sub-UI menu, respectively, and outputs the produced signal to the scaler 26. Accordingly, the sub-UI menu signal output from the UI generator 50 is processed by the scaler 26, and the sub-UI menu, which has a display size and a display position corresponding to the processing by the scaler 26, is displayed on a portion of the display unit 30 which is adjacent to the UI menu (for example, a main UI menu) (S110).

After operation S110, the MICOM 60 gets the menu display region information of the UI menu (for example, a main UI menu) and the sub-UI menu which are displayed on a portion of the display unit 30 from the scaler 26, and determines, based on the overall display region information and the menu display region information in the display unit 30, the remaining display region information corresponding the remaining portion of the display unit 30 where the UI menu (for example, a main UI menu) and the sub-UI menu are not displayed (S120). Thus, the MICOM 60 controls the scaler 26 to scale the video signal based on the determined display region information so as to have a display size and a display position where the image can be displayed on a portion within the remaining portion of the display unit 30 where the UI menu (for example, a main UI menu) and the sub-UI menu are not displayed (S130). Thus, the image displayed on the remaining portion of the display unit 30 considering only the UI menu (for example, a main UI menu) is reduced and displayed on a portion within the remaining portion of the display unit 30 considering the UI menu (for example, a main UI menu) and the sub-UI menu (S140).

Here, the MICOM 60 determines whether a key input exists through the user input portion 40 (S143). In the case that a key input exists, the MICOM 60 determines whether or not the key input is done by operation of the EXIT key (S145). In the case that the EXIT key is operated (2), the MICOM 60 controls the UI generator 50 and the scaler 26, in order to display the previous state that the sub-UI menu is not displayed but only the UI menu (for example, a main UI menu) is displayed, and determines whether or not another key input exists through the user input portion 40.

As described above, when the sub-UI menu display which is the lower menu is selected in the displayed UI menu, according to the control method of the display apparatus according to the present invention, the UI menu and sub-UI menu are displayed together, and the reduced video screen is displayed on the remaining portion considering the displayed UI menu and sub-UI menu.

In the control method of the above-described display apparatus, a two-stage process of displaying the main UI menu and the sub-UI menu have been described. However, if a second sub-UI menu corresponding to items displayed within the sub-UI menu exists, the main UI menu, the sub-UI menu, and the second sub-UI menu are displayed at the time of selecting the second sub-UI menu display, and a reduced image can be displayed on a remaining portion of the display unit 30 where the main UI menu, the sub-UI menu, and the second sub-UI menu are not displayed.

As described above, the display apparatus and the control method of controlling the same according to the present invention secures a sufficient UI menu display region on the full screen in the display unit when a UI menu is displayed in order to control the UI menu, and reduces the image under display into a remaining portion where the UI menu is not displayed. Thus, a display apparatus consistent with the present invention helps a user focus on manipulation of a UI menu, and thus the user efficiently performs manipulation of a complicated UI menu by dynamically altering and displaying an image considering the display region for the displayed UI menu, at the time of displaying the UI menu.

Although a few embodiments of the present invention have been shown and described, it will be appreciated by those skilled in the art that changes may be made in these embodiments without departing from the principles of the invention, the scope of which is defined in the appended claims.

As described above, the present invention provides a display apparatus, and a control method thereof which can efficiently perform manipulation of complicated UI information by securing a display region on which UI information is displayed and dynamically altering and displaying an image considering the display region for the displayed UI information, at the time of displaying the UI information.

## Claims

1. A display apparatus comprising:
a user input unit;
a display unit on which an image according to an input video signal is displayable;
a user interface (UI) generator operable to generate a UI information signal in order to display UI information;
a processor arranged to receive at least one of the video signal and the UI information signal and to process the received signal for display on the display unit; and
a controller operable, in response to a request for display of the UI information received via the user input unit, to control the UI generator and the processor so that the UI information is displayed on a portion of the display unit, and operable to control the processor so that the video signal is modified in order to display the image on another portion of the display unit.

2. The display apparatus of claim 1, wherein the modification to the video signal comprises reducing the resulting image to a predetermined size, and wherein the other portion of the display unit is a portion of the display unit where the UI information is not displayed.

3. The display apparatus of claim 2, wherein the processor comprises a scaler which scales the video signal in order to control at least one of a display size and a display position of the image.

4. The display apparatus of claim 3, wherein the controller determines, based on overall display region information of the display unit and display region information of the UI information detected from the scaler, remaining display region information corresponding to a remaining portion of the display unit where the UI information is not displayed.

5. The display apparatus of claim 4, wherein, if display of the UI information is requested, the controller controls the scaler in order to scale the video signal based on the remaining display region information such that the image display size and the image display position are controlled such that the image can be displayed on a portion within the remaining portion of the display unit.

6. The display apparatus of claim 3, wherein, if display of the UI information is requested, the controller controls the scaler to scale the video signal using predetermined display position information and predetermined display size information that are pre-stored such that the image display size corresponds to the predetermined display size information and the image display position in the remaining portion corresponds to the predetermined display position information when the UI information is being displayed.

7. The display apparatus of claim 5, wherein a basic screen ratio of the image is pre-stored, and the image maintains the basic screen ratio when the image is displayed in the portion within the remaining portion of the display unit.

8. The display apparatus of any one of the preceding claims, wherein the displayed UI information comprises:
a plurality of control items for controlling a plurality of functions; and
an indication highlight for indicating one of the plurality of control items; and wherein the controller controls the UI generator so that the indication highlight can be moved and displayed on the plurality of control items according to operation of the user input unit.

9. The display apparatus of claim 8, wherein, if display of sub-UI information corresponding to the control item indicating by the indication highlight is requested through the user input unit, the controller controls the UI generator and the scaler in order to display the sub-UI information on a portion of the display unit that is adjacent to the displayed UI information.

10. The display apparatus of claim 9, wherein, based on the overall display region information of the display unit, the display region information of the UI information and the sub-UI information detected from the scaler, the controller identifies the remaining display region information as display region information corresponding to a remaining portion of the display unit where the UI information and the sub-UI information are not displayed.

11. A control method of controlling a display apparatus comprising a display unit on which an image is displayable according to an input video signal, the control method comprising:
determining whether display of user interface (UI) information is requested;
producing a UI information signal for displaying the UI information if display of the UI information is requested;
displaying the UI information on a portion of the display unit; and
modifying the video signal in order to display the image on another portion of the display unit.

12. The control method as claimed in claim 11, wherein the modifying the video signal comprises reducing the resulting image to a predetermined size, and wherein the other portion of the display unit is a portion of the display unit where the UI information is not displayed.

13. The control method as claimed in claim 12, wherein the displaying the image on the remaining portion of the display unit comprises scaling the video signal in order to control at least one of a display size and a display position of the image.

14. The control method as claimed in claim 13, further comprising:
determining, based on overall display region information of the display unit and display region information of the displayed UI information, remaining display region information corresponding to a remaining portion of the display unit where the UI information has not been displayed.

15. The control method as claimed in claim 14, wherein the displaying the image on the remaining portion of the display unit comprises scaling the video signal based on the remaining display region information such that the image display size and the image display position are controlled such that the image can be displayed on a portion within the remaining portion of the display unit.

16. The control method as claimed in claim 15, further comprising:
pre-storing predetermined display position information and predetermined display size information, wherein, in order to display the image in the remaining portion at the time of displaying the UI information, the displaying the image on the remaining portion of the display unit comprises scaling the video signal such that the image display size corresponds to the predetermined display size information and the image display position corresponds to the predetermined display position information.

17. The control method as claimed in claim 15 or 16, further comprising:
pre-storing a basic screen ratio of the image, wherein the displaying the image on the remaining portion of the display unit comprises scaling the video signal based on the remaining display region information such that the image maintains the basic screen ratio if the image is displayed in the portion within the remaining portion of the display unit.

18. The control method as claimed in claim 15, 16 or 17, wherein the displayed UI information comprises:
a plurality of control items for controlling a plurality of functions; and
an indication highlight for indicating one of the plurality of control items, the control method further comprising:
controlling the indication highlight to be moved and displayed on the plurality of control items according to user input.

19. The control method as claimed in claim 18, further comprising:
determining whether display of sub-UI information corresponding to the control item indicated by the indication highlight is requested; and
displaying, if display of the sub-UI information is requested, the sub-UI information on a portion of the display unit that is adjacent to the displayed UI information.

20. The control method as claimed in claim 19, wherein, based on the overall display region information of the display unit, the display region information of the UI information and the sub-UI information detected from the scaler, the determining the remaining display region information comprises identifying the remaining display region information as display region information corresponding to a remaining portion of the display unit in which the UI information and the sub-UI information is not displayed.

21. The display apparatus of any one of claims 11 to 20, wherein the UI information is predetermined based on the type of display unit.

22. The display apparatus of claim 6, wherein the predetermined display position information and the predetermined display size are fixed values based on the UI information.

23. The control method of claim 11, wherein the UI information is predetermined based on the type of display unit.

24. The control method of claim 16, wherein the predetermined display position information and the predetermined display size are fixed values based on the UI information.

25. The control method of claim 18, wherein the user input is provided through a user input unit that communicates with the display apparatus.
